# FASCICULE DE BREVET EUROPEEN

(11) **EP 2 142 788 B1**
(45) Date de publication et mention de la délivrance du brevet: **28.12.2016**
(21) Numéro de dépôt: 08787951.6
(22) Date de dépôt: 14.04.2008
(51) Int. Cl.: F02K 9/52, F02K 9/56, F02K 9/50

(54) **PROCÉDÉ ET DISPOSITIF POUR ALIMENTER UN MOTEUR DE PROPULSION SPATIALE EN ERGOLS CRYOGÉNIQUES LIQUIDES**
VERFAHREN UND VORRICHTUNG ZUR BEREITSTELLUNG EINES RAUMANTRIEBSMOTORS MIT FLÜSSIGEN KRYOGENEN ANTRIEBMITTELN
METHOD AND DEVICE FOR SUPPLYING A SPACE PROPULSION ENGINE WITH LIQUID CRYOGENIC PROPELLANTS

(30) Priorité: 25.04.2007 FR 0702996
(43) Date de publication de la demande: 13.01.2010
(73) Titulaire: Airbus Safran Launchers SAS, 92130 Issy-les-Moulineaux (FR)
(72) Inventeur: LAINE, Robert, F-75015 Paris (FR)
(74) Mandataire: Gevers & Orès
(86) Numéro de dépôt international: PCT/FR2008/000517
(87) Numéro de publication internationale: WO 2008/142290

(56) Documents cités:
- US-A- 2 810 259
- US-A- 2 995 008
- US-A- 3 232 049
- US-A- 4 722 185
- US-A- 4 726 184
- US-A- 5 941 062
- US-A1- 2002 056 762

## Description

La présente invention concerne les moteurs de propulsion spatiale alimentés en ergols cryogéniques liquides.

Dans les moteurs connus de ce type, tels que par exemple les moteurs LOX-LH2 ou LOX-Kérosène utilisés actuellement sur les lanceurs, l'ergol comburant et l'ergol combustible sont injectés séparément dans la chambre de combustion desdits moteurs, le mélange desdits ergols s'effectuant dans cette dernière. Un exemple d'un tel moteur connu est décrit dans le document US-A-2,810.254.

Du fait que, dans ces moteurs connus, il est difficile de provoquer des variations de pression relativement importantes dans les alimentations des ergols sans modifier le rapport de ceux-ci dans leur mélange l'ajustement possible de la poussée par de telles variations de pression d'alimentation est relativement faible. En pratique, on ne peut guère obtenir qu'un ajustement de poussée de l'ordre de 10 à 20%.

La présente invention a pour objet de remédier à cet inconvénient.

A cette fin, selon l'invention, le procédé, sélon la revendication 1, pour alimenter en ergols cryogéniques liquides la chambre de combustion d'un-moteur de propulsion spatiale, par l'intermédiaire de moyens d'injection enfermés dans une enceinte,
est remarquable en ce que :
- en amont de ladite enceinte, on réalise le mélange à pression constante de l'ergol combustible et de l'ergol comburant :
- on introduit ledit mélange dans ladite enceinte par l'intermédiaire d'un orifice de celle-ci ; et
- pour injecter ledit mélange d'ergols à pression constante dans ladite chambre de combustion à partir de ladite enceinte, on choisit des moyens d'injection, permettant de faire varier le débit dudit mélange injecté.

Ainsi, grâce à la présente invention, on peut largement faire varier la poussée du moteur en faisant varier le débit de mélange injecté, sans changer la pression d'alimentation desdits moyens d'injection en ergols. Le mélange étant réalisé avant l'injection, le rapport ergol combustible/ergol comburant reste constant dans le mélange injecté quelle que soit la chute de pression du mélange à travers lesdits moyens d'injection et quel que soit le débit du mélange injecté par ces derniers. Bien entendu, comme on le verra ci-après, la géométrie variable desdits moyens d'injection est dimensionnée de façon à permettre d'assurer une chute de pression du mélange suffisante pour maintenir, sur une large plage de dé-bit, une bonne stabilité de la combustion dudit mélange dans ladite cham-bre de combustion.

Avantageusement les ergols sont choisis pour présenter des températures et des pressions de liquéfaction proches. Par exemple, l'ergol combustible peut être du méthane liquide, alors que l'ergol comburant peut être de l'oxygène liquide.

Par sécurité, à la mise en fonctionnement dudit moteur, l'allumage du mélange d'ergols à l'intérieur de ladite chambre de combustion n'est effectué qu'après que ledit mélange a atteint une vitesse supersonique à la sortie des moyens d'injection.

Pour la mise en oeuvre du procédé conforme à la présente invention, on peut utiliser un dispositif, selon la revendication 5, qui comporte un réservoir d'ergol com-bustible, un réservoir d'ergol comburant et des moyens de mise sous pression constante desdits réservoirs, et dans lequel :
- en amont de ladite enceinte sont prévus des moyens pour mélanger ledit ergol combustible et ledit ergol comburant à pression constante ;
- des moyens de communication relient lesdits moyens de mélange à un orifice de ladite enceinte ; et
- lesdits moyens d'injection sont aptes à faire varier le débit dudit mélange à pression constante injecté.

Lesdits moyens d'injection peuvent comporter une pluralité de pointeaux, dont chacun d'eux coopère avec un orifice calibré. Ladite plu-ralité de pointeaux peuvent être portés par une première plaque, et la plu-ralité correspondante des orifices calibrés peuvent être pratiqués dans une seconde plaque, des moyens étant prévus pour imprimer un mouvement relatif de rapprochement et d'éloignement entre lesdites première et seconde plaques.

Avantageusement, notamment dans le cas où les ergols présentent des températures et des pressions de liquéfaction proches, lesdits moyens de mise sous pression constante sont communs aux deux réservoirs d'ergols.

Dans le cas usuel où ledit moteur comporte un circuit de refroidissement autour de ladite chambre de combustion, il est avantageux que ledit mélange soit amené à ladite enceinte par l'intermédiaire dudit circuit de refroidissement.

Les moyens de mélange des deux ergols assurent le brassage par turbulence de ces derniers. Ils peuvent être extérieurs audit moteur et, dans ce cas, il est avantageux qu'ils soient reliés thermiquement à une source de chaleur, par exemple la chambre de combustion, permettant d'assurer que la température du mélange est telle que, à la pression d'alimentation des moyens d'injection, aucun desdits ergols ne passe en phase solide à la sortie desdits moyens de mélange. Aussi, selon une variante de réalisation préférée, ledit circuit de refroidissement de la chambre de combustion forme lui-même lesdits moyens de mélange.

Eventuellement, on peut prévoir une pompe pour augmenter la pression d'alimentation des moyens d'injection en ergols, à la condition d'assurer que le mélange d'ergols reste à une température assurant qu'il ne peut y avoir de phase solide dans les canalisations.

A toutes fins utiles, on notera que le document US-A-4,726, 184 concerne un agencement de moteur fusée et que le document US 2002/0056762 décrit une tuyère pour moteur fusée.

Les figures du dessin annexé feront bien comprendre comment l'invention peut être réalisée. Sur ces figures, des références identiques désignent des éléments semblables.
La figure 1 est une vue partielle schématique d'un moteur de propulsion spatiale et de son dispositif d'alimentation en ergols cryogéniques liquides permettant d'illustrer la présente invention.
La figure 2 illustre, en vue semblable à la figure 1, une variante de réalisation des moyens de mélange des ergols.
La figure 3 est une vue partielle schématique des moyens d'injection du mélange d'ergols, conformément à la présente invention.

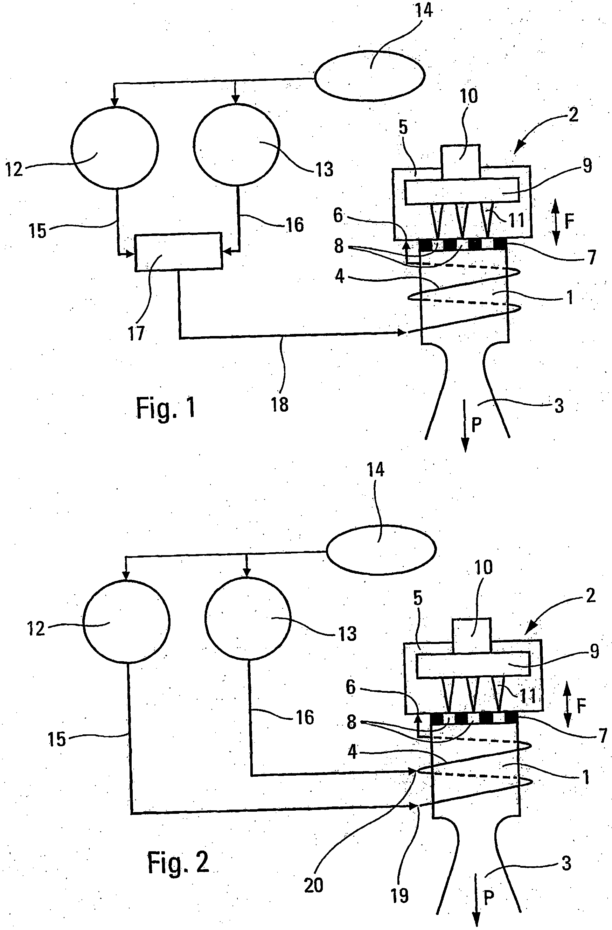

Sur les figures 1 et 2, on a représenté schématiquement et partiellement un moteur de propulsion spatiale par sa chambre de combustion 1, pourvue de moyens d'injection d'ergols 2 et d'une tuyère d'évacuation des gaz 3, et refroidie par un circuit de refroidissement périphérique 4.

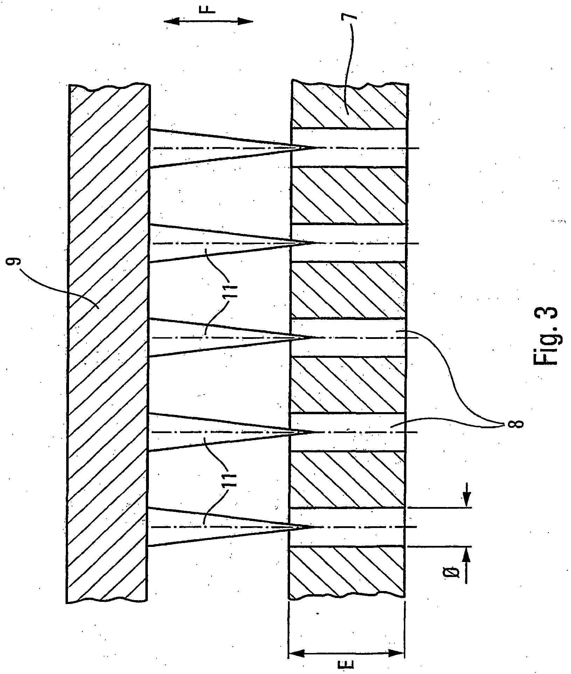

Les moyens d'injection d'ergols 2 comprennent une enceinte 5, dans laquelle débouche en 6 ledit circuit, de refroidissement périphérique 4. L'enceinte 5 est en communication avec la chambre de combustion 1 par l'intermédiaire d'une plaque 7 pourvue d'une pluralité d'orifices calibrés traversants 8, par exemple répartis en cercles concentriques ou en lignes et en colonnes (voir également la figure 3). De plus, l'enceinte 5 contient une plaque 9 au moins sensiblement parallèle à la plaque 7 et pouvant être rapprochée et éloignée de cette dernière (comme cela est symbolisé par la double flèche F) grâce à un actionneur 10, par exemple un vérin. Sur sa face dirigée vers la plaque 7, la plaque 9 porte une pluralité de pointeaux 11, disposés en correspondance avec lesdits orifices ca-librés 8, de façon que chaque pointeau 11 puisse coopérer avec un orifice calibré 8 pour définir la section de passage de ce dernier. Bien entendu, cette section de passage est variable sous la commande de l'actionneur 10.

De plus, sur les figures 1 et 2, on a représenté un réservoir 12 d'ergol comburant (par exemple de l'oxygène liquide), un réservoir 13 d'ergol combustible (par exemple du méthane liquide), ainsi qu'un réservoir 14 contenant un gaz neutre permettant de pressuriser, en commun et à pression constante, ledit ergol comburant et ledit ergol combustible.

Dans le système montré par la figure 1, les sorties 15 et 16 des réservoirs 12 et 13 sont réunies à un mélangeur 17 extérieur au moteur 1, 2, 3 et apte à former le mélange desdits ergols et à adresser ledit mélange au circuit de refroidissement 4 par sa sortie 18.

Le système montré par la figure 2 ne comporte pas de mélangeur 17. Au contraire, les sorties 15 et 16 des réservoirs 12 et 13 sont individuellement reliées au circuit de refroidissement 4 par l'intermédiaire d'orifices calibrés, respectivement 19 et 20. Dans ce cas, le mélange d'ergols s'effectue donc dans le circuit de refroidissement 4.

Dans les deux cas, après avoir refroidi la chambre de combustion 1, le mélange d'ergols pénètre à pression constante dans l'enceinte 5 et est injecté avec débit variable dans ladite chambre de combustion 1 par les moyens d'injection 7 à 11.

A la lumière des explications ci-dessus en regard des figures 1 à 3, on comprendra aisément que la poussée P du moteur conforme à la pré-sente invention peut être réglée par ajustement du débit du mélange d'ergols par les moyens d'injection 7 à 11, la pression d'alimentation de ces derniers par ledit mélange restant constante.

Pour initier la combustion du mélange d'ergols dans la chambre 2 (alors que la vitesse dudit mélange au niveau des moyens d'injection est supersonique), on prévoit un allumeur (non représenté) par exemple au centre ou à la périphérie de la plaque 7.

Par ailleurs, pour assurer la pulvérisation du mélange et la stabilité de la combustion à plein régime, chaque trou calibré 8 de la plaque 7 présente un rapport longueur E sur diamètre φ suffisamment élevé.

## Revendications

1. Procédé pour alimenter en ergols cryogéniques liquides la chambre de combustion (1) d'un moteur de propulsion spatiale, par l'intermédiaire de moyens d'injection (7 à 11) enfermés dans une enceinte (5) et permettant de faire varier le débit desdits ergols injectés,
**caractérisé en ce que** :
- on pressurise à pression constante un réservoir (12) d'ergol comburant et un réservoir (13) d'ergol combustible ;
- on mélange l'ergol comburant et l'ergol combustible provenant respectivement desdits réservoirs (12) et (13) à pression constante pour former un mélange desdits ergols à pression constante ;
- on introduit ledit mélange d'ergols à pression constante dans ladite enceinte (5) par l'intermédiaire d'un orifice (6) de celle-ci ; et
- par l'intermédiaire desdits moyens d'injection (7 à 11), on injecte ledit mélange d'ergols à pression constante, depuis ladite enceinte (5), dans ladite chambre de combustion (1).

2. Procédé selon la revendication 1,
**caractérisé en ce que** lesdits ergols présentent des températures et des pressions de liquéfaction proches.

3. Procédé selon la revendication 2,
**caractérisé en ce que** l'ergol combustible est du méthane liquide et l'ergol comburant est de l'oxygène liquide.

4. Procédé selon l'une des revendications 1 à 3,
**caractérisé en ce que**, à la mise en fonctionnement dudit moteur, l'allumage dudit mélange à l'intérieur de la chambre de combustion (1) n'est effectué qu'après que ledit mélange a atteint la vitesse sonique à la sortie de ladite chambre de combustion.

5. Dispositif pour alimenter en ergols cryogéniques liquides un moteur de propulsion spatiale pourvu d'une chambre de combustion (1) dans laquelle lesdits ergols sont injectés par l'intermédiaire de moyens d'injection (7 à 11) enfermés dans une enceinte (5) et permettant de faire varier le débit desdits ergols injectés, ledit dispositif comportant un réservoir (12) d'ergol comburant et un réservoir (13) d'ergol combustible,
**caractérisé en ce qu'**il comporte :
- des moyens (14) de mise sous pression constante desdits réservoirs (12) et (13);
- des moyens (4, 17, 19, 20) pour mélanger l'ergol comburant et l'ergol combustible provenant respectivement desdits réservoirs (12) et (13) à pression constante et former un mélange desdits ergols à pression constante ; et
- des moyens de communication (4, 18, 19, 20) pour introduire ledit mélange d'ergols à pression constante dans ladite enceinte (5) par l'intermédiaire d'un orifice (6) de celle-ci.

6. Dispositif selon la revendication 5,
**caractérisé en ce que** lesdits moyens d'injection comportent une pluralité de pointeaux (11), dont chacun d'eux coopère avec un orifice calibré (8).

7. Dispositif selon la revendication 6,
**caractérisé en ce que** la pluralité de pointeaux (11) sont portés par une première plaque (9), **en ce que** la pluralité des orifices calibrés (8) sont pratiqués dans une seconde plaque (7) et **en ce que** des moyens (10) sont prévus pour imprimer un mouvement relatif de rapprochement et d'éloignement (F) entre lesdits première et seconde plaques (9, 7).

8. Dispositif selon l'une des revendications 5 à 7, pour un moteur comportant un circuit de refroidissement (4) autour de ladite chambre de combustion (1),
**caractérisé en ce que** ledit mélange d'ergols est amené à ladite enceinte (5) par l'intermédiaire dudit circuit de refroidissement (4).

9. Dispositif selon l'une des revendications 5 à 8,
**caractérisé en ce que** lesdits moyens (17) de mélange des ergols sont extérieurs audit moteur.

10. Dispositif selon la revendication 8,
**caractérisé en ce que** ledit circuit de refroidissement (4) forme lesdits moyens de mélange.

## Patentansprüche

1. Verfahren zur Versorgung der Brennkammer (1) eines Raumantriebsmotors mit flüssigen kryogenen Ergol durch Einspritzmittel (7 bis 11), die in einem Behälter (5) eingeschlossen sind und die es ermöglichen, den Durchsatz der eingespritzten Ergol zu variieren, **dadurch gekennzeichnet, dass**:
- ein Oxidatortank (12) und ein Brennstofftank (13) unter konstanten Druck gesetzt werden;
- das Oxidatorergol und das Brennstoffergol, die jeweils aus den Tanks (12) und (13) mit konstantem Druck kommen, gemischt werden, um eine Mischung der Ergol unter konstantem Druck zu bilden;
- die Mischung aus Ergol unter konstantem Druck in den Behälter (5) über eine Öffnung (6) von diesem eingeführt wird; und
- die Mischung aus Ergol unter konstantem Druck über die Einspritzmittel (7 bis 11) von dem Behälter (5) in die Brennkammer (1) eingespritzt wird.

2. Verfahren nach Anspruch 1,
**dadurch gekennzeichnet, dass** die Ergol Temperaturen und Drucke in der Nähe der Verflüssigung aufweisen.

3. Verfahren nach Anspruch 2,
**dadurch gekennzeichnet, dass** das Brennstoffergol flüssiges Methan ist und das Oxidatorergol flüssiger Sauerstoff ist.

4. Verfahren nach einem der Ansprüche 1 bis 3,
**dadurch gekennzeichnet, dass** bei der Inbetriebnahme des Motors, das Zünden der Mischung im Inneren der Brennkammer (1) erst dann durchgeführt wird, wenn die Mischung am Ausgang der Brennkammer die Schallgeschwindigkeit erreicht hat.

5. Vorrichtung zur Versorgung eines Raumantriebsmotors mit flüssigen kryogenen Ergol, der mit einer Brennkammer (1) versehen ist, in die die Ergol durch Einspritzmittel (7 bis 11), die in einem Behälter (5) eingeschlossen sind und die es ermöglichen, den Durchsatz der eingespritzten Ergol zu variieren, eingespritzt werden, wobei die Vorrichtung einen Oxidatortank (12) und einen Brennstofftank (13) aufweist,
**dadurch gekennzeichnet, dass** sie Folgendes aufweist:
- Mittel (14) zum unter konstanten Druck Setzen der Tanks (12) und (13);
- Mittel (4, 17, 19, 20) zum Mischen des Oxidatorergols und des Brennstoffergols, die jeweils aus den Tanks (12) und (13) mit konstantem Druck kommen, und zum Bilden einer Mischung der Ergol unter konstantem Druck;
und
- Verbindungsmittel (4, 18, 19, 20) zum Einführen der Mischung aus Ergol unter konstantem Druck in den Behälter (5) über eine Öffnung (6) von diesem.

6. Vorrichtung nach dem Anspruch 5,
**dadurch gekennzeichnet, dass** die Einspritzmittel mehrere Nadelventile (11) aufweisen, wovon jedes mit einer kalibrierten Öffnung (8) zusammenwirkt.

7. Vorrichtung nach dem Anspruch 6,
**dadurch gekennzeichnet, dass** die mehreren Nadelventile (11) von einer ersten Platte (9) getragen sind, dass die mehreren kalibrierten Öffnungen (8) in einer zweiten Platte (7) ausgebildet sind und dass die Mittel (10) vorgesehen sind, um eine relative Bewegung des Annäherns und des Entfernens (F) zwischen der ersten und zweiten Platte (9, 7) zu veranlassen.

8. Vorrichtung nach einem der Ansprüche 5 bis 7 für einen Motor, der einen Kühlkreis (4) um die Brennkammer (1) aufweist,
**dadurch gekennzeichnet, dass** die Mischung aus Ergol über den Kühlkreis (4) zu dem Behälter (5) geführt wird.

9. Vorrichtung nach einem der Ansprüche 5 bis 8,
**dadurch gekennzeichnet, dass** die Mittel (17) zum Mischen der Ergol außerhalb des Motors angeordnet sind.

10. Vorrichtung nach dem Anspruch 8,
**dadurch gekennzeichnet, dass** der Kühlkreis (4) die Mittel zum Mischen bildet.

## Claims

1. A method for supplying the combustion chamber (1) of a space propulsion engine with cryogenic liquid propellants by injection means (7 to 11) contained in an enclosure (5) and enabling the flow rate of said injected propellants to be varied,
**characterized in that**:
- an oxidizer propellant tank (12) and a fuel propellant tank (13) are pressurized at constant pressure;
- the fuel propellant and the oxidizer propellant coming respectively from said tanks (12) and (13) are mixed at constant pressure so as to form a mixture of said propellants at constant pressure;
- said mixture of propellants at constant pressure is fed into said enclosure (5) via an orifice (6) in the latter; and
- said mixture of propellants at constant pressure is injected from said enclosure (5) into said combustion chamber (1) by the injection means (7 to 11).

2. The method as claimed in claim 1, **characterized in that** said propellants have similar liquefaction temperatures and pressures.

3. The method as claimed in claim 2, **characterized in that** the fuel propellant is liquid methane and the oxidizer propellant is liquid oxygen.

4. The method as claimed in one of claims 1 to 3, **characterized in that**, upon operating said engine, said mixture is ignited inside the combustion chamber (1) only after said mixture has reached the sonic velocity upon exiting said combustion chamber.

5. A device for supplying cryogenic liquid propellants to a space propulsion engine provided with a combustion chamber (1) into which said propellants are injected by injection means (7 to 11) contained in an enclosure (5) and enabling the flow rate of said injected propellants to be varied, said device comprising a oxidizer propellant tank (12), an fuel propellant tank (13),
**characterized in that** it comprises:
- means (14) for pressurizing said tanks (12, 13) to a constant pressure;
- means (4, 17, 19, 20) for mixing said fuel propellant with said oxidizer propellant coming respectively from said tanks (12) and (13) at constant pressure and for forming a mixture of said propellants at constant pressure; and
- communication means (4, 18, 19, 20) for feeding said mixture of propellants at constant pressure into said enclosure (5) via an orifice (6) in the latter.

6. The device as claimed in claim 5, **characterized in that** said injection means comprise a plurality of needles (11), each of them cooperating with a calibrated orifice (8).

7. The device as claimed in claim 6, **characterized in that** the plurality of needles (11) are supported by a first plate (9), **in that** the plurality of calibrated orifices (8) are made in a second plate (7) and **in that** means (10) are provided for imparting a relative movement (F) between said first and second plates (9, 7) whereby the distance therebetween is decreased or increased.

8. The device as claimed in one of claims 5 to 7, for an engine that includes a cooling circuit (4) around said combustion chamber (1), **characterized in that** said propellant mixture is fed into said enclosure (5) via said cooling circuit (4).

9. The device as claimed in one of claims 5 to 8, **characterized in that** said means (17) for mixing the propellants are external to said engine.

10. The device as claimed in claim 8, **characterized in that** said cooling circuit (4) forms said mixing means.
